# EUROPEAN PATENT APPLICATION

(11) **EP 3 816 852 A1**
(43) Date of publication of application: **05.05.2021**
(21) Application number: 20201991.5
(22) Date of filing: 15.10.2020
(51) Int. Cl.: G06K 9/00, G06K 9/46, G06K 9/62, G06T 7/20

(54) **METHOD AND DEVICE FOR DETECTING HAND ACTION**

(30) Priority: 28.10.2019 CN 201911030310
(71) Applicant: FUJITSU LIMITED, Kanagawa 211-8588 (JP)
(72) Inventor: Li, Fei, Beijing, 100027 (CN); Yang, Jing, Beijing, 100027 (CN); Liu, Rujie, Beijing, 100027 (CN)
(74) Representative: Hoffmann Eitle

(57) **Abstract**

A method and a device for detecting a hand action are provided. The method includes: identifying an area including hands of a person in one frame image of a video; dividing the area into multiple blocks and calculating a motion vector for each of the blocks; clustering multiple resulted motion vectors into a first cluster and a second cluster, wherein multiple first blocks corresponding to the first cluster of motion vectors correspond to one of a left hand and a right hand, and multiple second blocks corresponding to the second cluster of motion vectors correspond to the other one of the left hand and the right hand; identifying movements of the hands to which the first cluster and the second cluster correspond in a frame image subsequent to the one frame image; and matching the identified movements with a predetermined action mode to determine an action of the hands.

## Description

### FIELD

The present disclosure relates to a method and a device for detecting an action, and in particular to a method and a device for detecting a hand action based on motion field analysis.

### BACKGROUND

Hand action recognition is an important task in computer vision, and mainly aims to analyze and identify a type of hand action in a video. In recent years, a deep learning-based method is applied to this task. Despite good performance, this method still has the following disadvantages. First, a large amount of data is required to be labeled in advance in order to train a model, which requires a lot of manual labor. In addition, it may be difficult to obtain a large amount of labeled data for some application. Second, the trained model is like a "black box" for developers, and it is usually difficult to provide a reasonable explanation for a wrong output. Third, an existing model cannot be directly used if a new type of action is to be identified, and it is necessary to generate a new model by training.

### SUMMARY

In view of the above disadvantages in the deep learning-based method, a new method of detecting a hand action is provided according to the present disclosure. With the method according to the present disclosure, a motion field of an area including hands in each frame of a video is analyzed. Therefore, two hands can be distinguished from each other in each frame image based on motion information even if the two hands overlap each other to a large extent. In addition, in the present disclosure, a hand action is described based on absolute movement and/or relative movement of the two hands, and the hand action is identified based on a predetermined action mode. Therefore, compared with the deep learning-based method, a high-level description based on motion information may be given to various hand actions to be identified in the present disclosure. This description relies more on prior knowledge rather than a large amount of data. In this way, identification result obtained by using the method according to the present disclosure is easier for the developers to understand. Further, it is convenient to add a new type of action.

A method of detecting a hand action is provided according to an aspect of the present disclosure. The method includes: identifying an area including hands of a person in one frame image of a video; dividing the area into a plurality of blocks, and calculating a motion vector for each of the blocks; clustering a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand; identifying movements of the hands to which the first cluster and the second cluster correspond in a frame image subsequent to the one frame image; and matching the identified movements with a predetermined action mode to determine an action of the hands.

A device for detecting a hand action is provided according to another aspect of the present disclosure. The device includes one or more processors configured to: identify an area including hands of a person in one frame image of a video; divide the area into a plurality of blocks, and calculate a motion vector for each of the blocks; cluster a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand; identify movements of the hands to which the first cluster and the second cluster correspond in a frame image subsequent to the one frame image; and match the identified movements with a predetermined action mode to determine an action of the hands.

A recording medium storing a program is provided according to another aspect of the present disclosure. The program, when executed by a computer, causes the computer to perform the method of detecting a hand action as described above.

### BRIEF DESCRIPTION OF THE DRAWINGS

Figure 1 is a schematic flowchart of a method of detecting a hand action according to the present disclosure;
Figure 2 shows an example of distinguishing a left hand from a right hand in a frame image;
Figure 3 shows an example of processing in step S140 shown in Figure 1;
Figure 4 shows another example of processing in step S140 shown in Figure 1; and
Figure 5 is a block diagram showing an exemplary configuration of computer hardware for implementing the present disclosure.

### DETAILED DESCRIPTION OF EMBODIMENTS

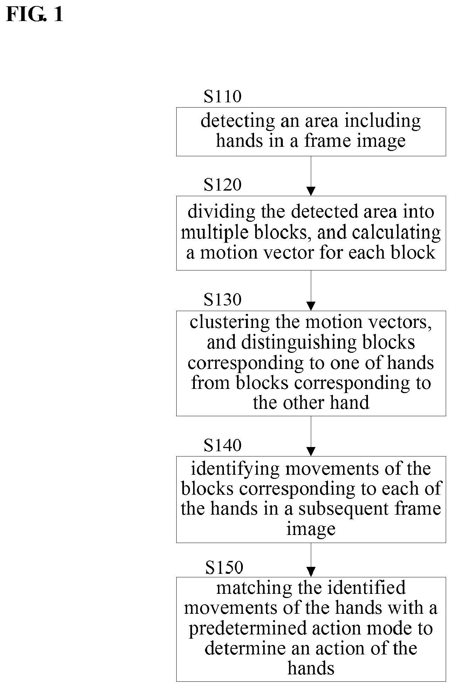

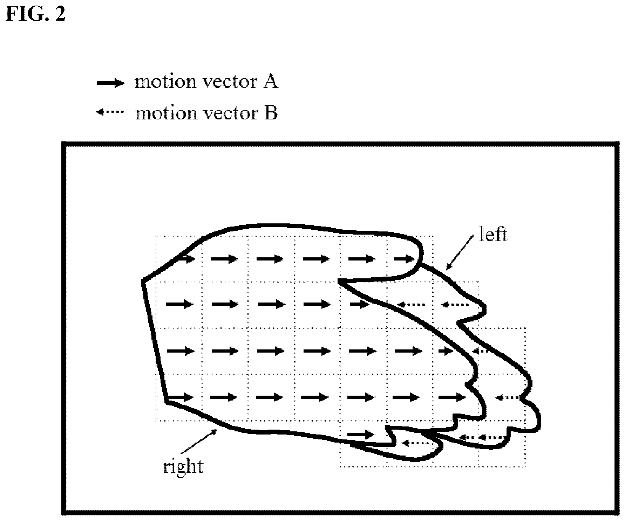

Figure 1 shows a flowchart of a method of detecting a hand action according to the present disclosure, and Figure 2 shows processing in an exemplary frame image.

As shown in Figure 1, an area including hands of a person is detected in a specific frame image of a video in step S110. Figure 2 shows an area including hands that is detected in an exemplary frame image.

In an example, a color-based detection method may be used in step S110. For example, in a video including hands as main objects, an area with skin color may be detected in a frame image as the area including hands. In another example, the area including hands of the person may be detected by using a conventional deep learning-based method. Since it is a relatively simple task to detect an area including hands, a known detection model may be used, and it is easy to obtain a large number of ordinary images including hands as training data. Therefore, the deep learning-based method may be applicable in step S110.

In step S120, for the specific frame image, the detected area including hands is divided into multiple blocks, and a motion vector is calculated for each of the blocks. In Figure 2, an arrow represents a motion vector for each block. A size of block is not limited in the present disclosure, and those skilled in the art may easily set an appropriate size of block according to actual application or design requirements.

A motion field may be obtained by arranging the motion vectors for all blocks together. A left hand and a right hand may be distinguished and identified in a frame image by analyzing the motion field according to the present disclosure. In particular, there may be a situation in which both hands unintentionally move in a certain direction at the same time, or a camera moves during a shooting process. This results in a common movement of both hands in the video, for example, a common translational movement of both hands. In this case, a global motion vector may be calculated for the detected area including hands, and then the global motion vector is subtracted from the motion vector for each block. In this way, influence of common movement of both hands may be eliminated or reduced, so that movement of each hand can be detected accurately. It should be noted that, it is easy for those skilled in the art to calculate the global motion vector by using any known method, which is not limited in the present disclosure.

In step S130, for the specific frame image, the resulted motion vectors for the blocks are clustered. Those skilled in the art may use any appropriate clustering algorithm to perform this step. In an example, K-means clustering algorithm with K=2 may be used to obtain two clusters of motion vectors. Multiple blocks corresponding to the first cluster of motion vectors may correspond to one of a left hand and a right hand, and multiple blocks corresponding to the second cluster of motion vectors may correspond to the other one of the left hand and the right hand. Therefore, the left hand can be distinguished from the right hand in the area including hands in the specific frame image. Further, in another example, an average value of motion vectors of each cluster may be used to describe movement of the corresponding hand.

In the exemplary frame image shown in Figure 2, motion vectors of the respective blocks are clustered into two clusters, that is, motion vector A and motion vector B. Furthermore, a group of blocks corresponding to the motion vector A may be distinguished from a group of blocks corresponding to the motion vector B, so as to distinguish the left hand and the right hand from each other.

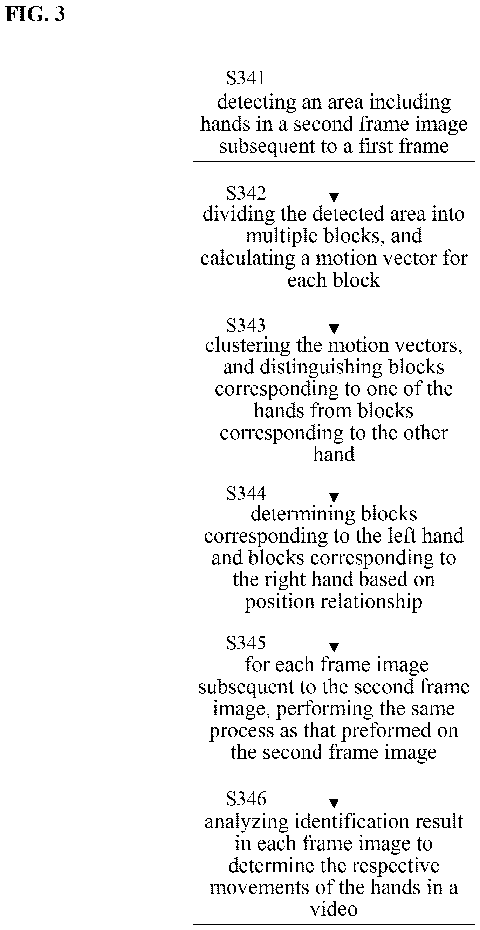

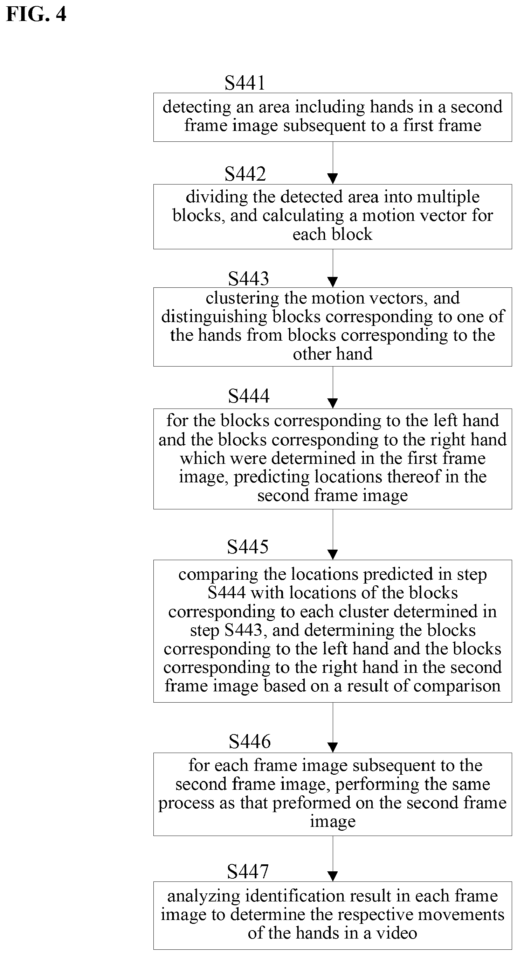

The two groups of blocks respectively corresponding to the left hand and the right hand have been distinguished from each other in the specific frame image by performing the above steps. If the specific frame image is the first frame in the video, it is possible to designate one group of blocks as corresponding to the left hand and the other group of blocks corresponding to the right hand. In an example, designation may be made based on relative location between the two groups of blocks. For example, as shown in Figure 2, one group of blocks located on a relatively upper side may be designated as blocks corresponding to the right hand, and the other group of blocks located on a relatively lower side may be designated as blocks corresponding to the left hand. Alternatively, one group of blocks located on a relatively left side may be designated as corresponding to the left hand, and the other group of blocks located on a relatively right side may be designated as corresponding to the right hand. The present disclosure is not limited to these examples, and different designation may be made by those skilled in the art based on the relative location between the two groups of blocks. Further, in a case that the specific frame image is not the first frame, the blocks corresponding to the left hand and the blocks corresponding to the right hand may be determined by using a method which will be described later in conjunction with Figures 3 and 4.

In step S140, movement of the blocks corresponding to each hand is determined in a frame image subsequent to the specific frame image. That is, movements of the left hand and the right hand are identified in the subsequent frame image of the video. Processing in step S140 will be described in detail later in conjunction with Figures 3 and 4.

Then, in step S150, the identified movements of the left hand and the right hand are matched with a predetermined action mode, so as to determine the action of the hands. The predetermined action mode may be defined in advance by a developer based on prior knowledge. For example, an action that two hands move in opposite directions may be defined as an action mode of rubbing hands. In addition, the action mode of rubbing hands may be defined based on a movement speed of the hands within several consecutive frames, a periodic change in the movement speed of the hands, a change of a movement direction when the speed decreases to zero, and the like. If the movements of the hands identified in step S140 match the action mode of rubbing hands, it may be determined that the hand action in the video is an action of rubbing hands.

The predetermined action mode is briefly described above by taking the action of rubbing hands as an example. Those skilled in the art may easily set various action modes according to actual design requirements. For example, the predetermined action mode may be defined based on one or more factors such as movement direction, movement speed, and a shape of a hand.

In a case that the predetermined action mode is defined based on the shape of the hand, the action of rubbing hands is still taken as an example. When the two hands move in opposite directions and the identified area for each hand includes no elongated part, it is indicated that fingers are close together. This action may be defined as an action mode of palm rubbing. In addition, when the two hands move in opposite directions and the area for each hand includes elongated parts, it is indicated that the fingers are separated. This action may be defined as an action mode of hand rubbing with interlaced fingers.

In addition, when one hand does not move in the frame image while the other hand moves in a certain direction and the area for the other hand includes elongated parts (indicating separate fingers), this action may be defined as an action mode of rubbing one hand along fingers of the other hand.

In the above example in which the fingers are separated, if a thumb is further identified based on the shape of the elongated parts (the thickest one of the elongated parts corresponds to the thumb), the action mode may be more accurately defined based on a relative location between the thumb and other fingers. For example, when thumbs of both hands are on the same side of the other fingers, this action may be defined as a palm-to-palm rubbing mode. When the thumbs of both hands are on different sides of other fingers, this action may be defined as a rubbing mode in which the palm of one hand overlaps the back of the other hand.

It can be seen from the above examples that, in the present disclosure, various hand action modes are defined based on high-level description of motion information and/or shape information of hands, relying more on prior knowledge rather than on a large amount of data.

An example of the processing in step S140 shown in Figure 1 is described below with reference to Figure 3. In this example, in order to facilitate understanding of the method according to the present disclosure, it is assumed that the specific frame image is the first frame in the video and is referred to as "first frame image" hereinafter.

When the left hand and the right hand have been identified in the first frame image through steps S110 to S130, an area including hands is detected in a second frame image immediately subsequent to the first frame image (in step S341). The detected area is divided into multiple blocks, and a motion vector is calculated for each of the blocks (in step S342). Then, the calculated motion vectors are clustered into a third cluster and a fourth cluster, and two groups of blocks respectively corresponding to the two hands are distinguished from each other based on the clustering result (in step S343). Steps S341 to S343 are the same as steps S110 to S130 performed on the first frame image shown in Figure 1, and thus detailed descriptions thereof are omitted.

At this time, the two groups of blocks respectively corresponding to the two hands have been distinguished from each other, but it is not definite which group corresponds to the left hand and which group corresponds to the right hand. Therefore, a group of blocks corresponding to the left hand and a group of blocks corresponding to the right hand are determined based on position relationship in step S344. In an example, in the second frame image, if a group of blocks corresponding to the fourth cluster of motion vectors are located on a right side relative to a group of blocks corresponding to the third cluster of motion vectors, the group of blocks corresponding to the third cluster of motion vectors may be determined as blocks corresponding to the left hand, and the group of blocks corresponding to the fourth cluster of motion vectors may be determined as blocks corresponding to the right hand. In another example, a group of blocks located on a relatively upper side out of the two groups of blocks may be designated as blocks corresponding to the left hand, and a group of blocks located on a relatively lower side may be designated as blocks corresponding to the right hand.

Then, in step S345, the processing preformed on the second frame image is performed on a third frame image subsequent to the second frame image, so that blocks corresponding to the left hand and blocks corresponding to the right hand are determined in the third frame image. Same processing is performed on all of the subsequent frames in the video. In this way, the left hand and the right hand can be identified in each frame of the video.

Then, as shown in step S346, identification result in each frame is analyzed to determine respective movements of the hands in the video.

The method shown in Figure 3 is simple in processing. However, since locations of the left hand and the right hand may be exchanged in the video while identification is performed independently in each of the frame images according to this method, there may be a problem that the left or right hands determined in the respective frame images may be inconsistent. For example, when the locations of the two hands are exchanged, blocks determined to be corresponding to the left hand in a previous frame image may be located on the right side in a next frame image and accordingly is identified as corresponding to the right hand, which results in inaccurate identification of the movements of the hands.

Another example of the processing in step S140 shown in Figure 1 is described below with reference to Figure 4. In this example, it is also assumed that the specific frame image is the first frame in the video, and is referred to as the "first frame image" hereinafter.

When the blocks corresponding to the left hand and the blocks corresponding to the right hand have been identified in the first frame image, an area including hands is detected in a second frame image immediately subsequent to the first frame image (in step S441). The detected area is divided into multiple blocks, and a motion vector is calculated for each of the blocks (in step S442). Then, the calculated motion vectors are clustered into a third cluster and a fourth cluster, and two groups of blocks respectively corresponding to the two hands are distinguished from each other based on the clustering result (in step S443). Steps S441 to S443 are the same as steps S 110 to S130 performed on the first frame image shown in Figure 1, and thus detailed descriptions thereof are omitted.

At this time, it can be determined that one group of blocks corresponding to the third cluster of motion vectors correspond to one of the left hand and the right hand, and the other group of blocks corresponding to the fourth cluster of motion vectors correspond to the other one of the left hand and the right hand. However, it has not been definite which group corresponds to the left hand and which group corresponds to the right hand.

In step S444, locations of the blocks which have been determined to be corresponding to the left hand in the first frame image are predicted in a second frame image (referred to as "left hand prediction location" hereinafter). Locations of the blocks which have been determined to be corresponding to the right hand in the first frame image are predicted in the second frame image (referred to as "right hand prediction location" hereinafter).

Then, the predicted locations obtained in step S444 are compared with the locations of the blocks corresponding to the third cluster and the fourth cluster obtained in step S443, and then blocks corresponding to the left hand and blocks corresponding to the right hand may be determined in the second frame image based on a result of comparison, as shown in step S445. In an example, a group of blocks that overlap or are close to the left hand prediction location, out of the two groups of blocks corresponding to the third cluster and the fourth cluster, are determined as blocks corresponding to the left hand. The other group of blocks that overlap or are close to the right hand prediction location, out of the two groups of blocks corresponding to the third cluster and the fourth cluster, are determined as blocks corresponding to the right hand.

Then, the processing preformed on the second frame image is performed on a third frame image subsequent to the second frame image, so that blocks corresponding to the left hand and blocks corresponding to the right hand are determined in the third frame image. In particular, in the processing for the third frame image, locations of the blocks, which are determined to be corresponding to each hand in the second frame image, are predicted in the third frame image. As shown in Step S446, the processing preformed on the third frame image is performed on all of the subsequent frame images in the video. In this way, the left hand and the right hand can be identified in each frame image of the video.

Then, in step S447, the respective movements of the hands in the video are determined by analyzing the identification result in each frame image.

The left hand and the right hand can be identified in each frame image of the video by using the method shown in Figure 4, so that the respective movements of the hands in the video can be identified. In addition, with this method, the left hands and the right hands identified in the respective frame images have consistency. Even if the locations of the left hand and the right hand are exchanged, the movements of the left hand and the right hand can be accurately tracked in the video.

The present disclosure is described above in conjunction with specific embodiments. In the present disclosure, the blocks corresponding to the left hand and the blocks corresponding to the right hand are distinguished from each other based on clusters of motion vectors. Therefore, the two hands can be distinguished from each other based on motion information even if the two hands overlap each other to a large extent. In addition, the type of hand action is defined based on prior knowledge in the present disclosure. Therefore, it is easier for developers to understand the identification result, and it is convenient to add a new type of action.

The method described above may be implemented by hardware, software or a combination of hardware and software. Programs included in the software may be stored in advance in a storage medium arranged inside or outside an apparatus. In an example, these programs, when being executed, are written into a random access memory (RAM) and executed by a processor (for example, central processing unit (CPU)), thereby implementing various processing described herein.

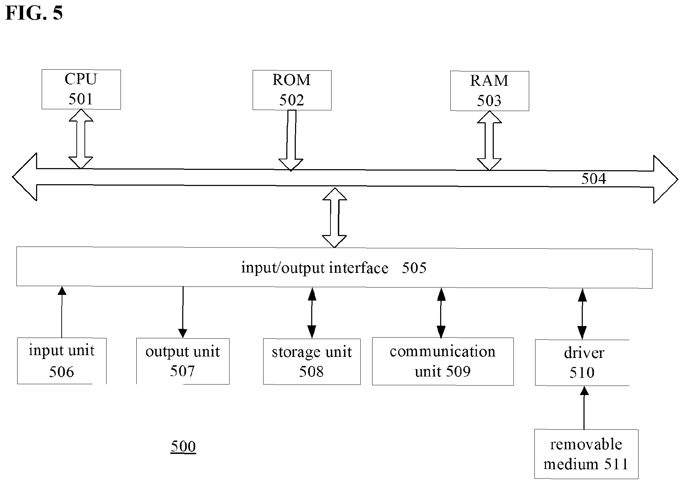

Figure 5 is a schematic block diagram showing computer hardware for performing the method according to the present disclosure based on programs. The computer hardware is an example of the device for detecting a hand action according to the present disclosure.

As shown in Figure 5, a central processing unit (CPU) 501, a read-only memory (ROM) 502, and a random access memory (RAM) 503 are connected to each other via a bus 504 in a computer 500.

An input/output interface 505 is connected to the bus 504. The input/output interface 505 is further connected to the following components: an input unit 506 implemented by keyboard, mouse, microphone and the like; an output unit 507 implemented by display, speaker and the like; a storage unit 508 implemented by hard disk, nonvolatile memory and the like; a communication unit 509 implemented by network interface card (such as local area network (LAN) card, and modem); and a driver 510 that drives a removable medium 511. The removable medium 511 may be for example a magnetic disk, an optical disk, a magneto-optical disk or a semiconductor memory.

In the computer having the above structure, the CPU 501 loads a program stored in the storage unit 508 into the RAM 503 via the input/output interface 505 and the bus 504, and executes the program so as to perform the method described above.

The program to be executed by the computer (CPU 501) may be recorded on the removable medium 511 which is a packaged medium such as magnetic disk (including floppy disk), optical disk (including compact disc read-only memory (CD-ROM)), digital versatile optical disc (DVD) and the like), magneto-optical disk, or semiconductor memory. In addition, the program to be executed by the computer (CPU 501) may also be provided via wired or wireless transmission medium such as local area network, Internet, or digital satellite broadcasting.

When the removable medium 511 is installed in the driver 510, the program may be installed in the storage unit 508 via the input/output interface 505. In addition, the program may be received by the communication unit 509 via wired or wireless transmission medium, and is installed in the storage unit 508. Alternatively, the program may be installed in ROM 502 or the storage unit 508 in advance.

The program executed by the computer may be a program that performs operations in accordance to the order described herein, or may be a program that performs operations in parallel or as needed (for example, when called).

The units or devices described herein are only logical and do not strictly correspond to physical devices or entities. For example, functions of each unit described herein may be implemented by multiple physical entities, or functions of multiple units described herein may be implemented by a single physical entity. In addition, the features, components, elements, steps and the like described in one embodiment are not limited to this embodiment, and may also be applied to other embodiments, such as replacing specific features, components, elements, steps and the like in other embodiments or being combined with specific features, components, elements, steps and the like in other embodiments.

The scope of the present disclosure is not limited to the specific embodiments described herein. Those skilled in the art should understand that, depending on design requirements and other factors, various modifications or changes may be made to the embodiments herein without departing from the principle of present disclosure. The scope of the present disclosure is defined by the appended claims and equivalents thereof.

### APPENDIXES

1. A method of detecting a hand action, comprising:
   identifying an area comprising hands of a person in one frame image of a video;
   dividing the area into a plurality of blocks, and calculating a motion vector for each of the blocks;
   clustering a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand;
   identifying movements of the hands to which the first cluster and the second cluster correspond in a frame image subsequent to the one frame image;
   matching the identified movements with a predetermined action mode to determine an action of the hands.
2. The method according to Appendix 1, further including:
   determining, based on the identified movements, that the hands perform a repetitive action, and
   determining the number of times for the repetitive action.
3. The method according to Appendix 1, wherein
   the area is identified in the one frame image based on color; or
   the area is identified in the one frame image by using a deep learning-based model.
4. The method according to Appendix 1, further including: subtracting a global motion vector from the calculated motion vector for each block before performing the clustering,
   wherein the global motion vector represents a common movement of the hands to which the first cluster and the second cluster correspond, or a movement of a camera which captures the video.
5. The method according to Appendix 1, wherein an average value of motion vectors of each of the first cluster and the second cluster represents a movement of the hand corresponding to the cluster.
6. The method according to Appendix 1, further comprising: determining, in another frame image subsequent to the one frame image, blocks corresponding to the left hand and blocks corresponding to the right hand, based on the plurality of first blocks and the plurality of second blocks in the one frame image.
7. The method according to Appendix 6, further including:
   identifying an area including hands in the another frame image, calculating a motion vector for each block in the identified area, and clustering the calculated motion vectors into a third cluster and a fourth cluster, wherein the third cluster of motion vectors correspond to a plurality of third blocks, and the fourth cluster of motion vectors correspond to a plurality of fourth blocks;
   predicting locations of the plurality of first blocks and locations of the plurality of second blocks in the another frame image;
   comparing the predicted locations of the plurality of first blocks and the plurality of second blocks with locations of the plurality of third blocks and the plurality of fourth blocks;
   determining the blocks corresponding to the left hand and the blocks corresponding to the right hand in the another frame image based on a result of comparison.
8. The method according to Appendix 7, wherein
   one party of the plurality of third blocks and the plurality of fourth blocks which is overlapped with or close to the predicted locations of the plurality of first blocks is determined to be corresponding to the one of the left hand and the right hand;
   the other party of the plurality of third blocks and the plurality of fourth blocks which is overlapped with or close to the predicted locations of the plurality of second blocks is determined to be corresponding to the other one of the left hand and the right hand.
9. The method according to Appendix 1, wherein an action of hands is defined with one or more of movement direction, movement speed and a shape of the left hand and the right hand, in the predetermined action mode.
10. A device for detecting a hand action, comprising one or more processors configured to:
   identify an area comprising hands of a person in one frame image of a video;
   divide the area into a plurality of blocks, and calculate a motion vector for each of the blocks;
   cluster a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand;
   identify movements of the hands to which the first cluster and the second cluster correspond in a frame image subsequent to the one frame image;
   match the identified movements with a predetermined action mode to determine an action of the hands.
11. A recording medium storing a program that, when executed by a computer, causes the computer to perform the method of detecting a hand action according to Appendixes 1 to 9.

## Claims

1. A method of detecting a hand action, comprising:
identifying an area comprising hands of a person in one frame image of a video;
dividing the area into a plurality of blocks, and calculating a motion vector for each of the blocks;
clustering a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand;
identifying movements of the hands to which the first cluster and the second cluster correspond in a frame image subsequent to the one frame image;
matching the identified movements with a predetermined action mode to determine an action of the hands.

2. The method according to claim 1, further comprising:
determining, based on the identified movements, that the hands perform a repetitive action, and
determining the number of times for the repetitive action.

3. The method according to claim 1, wherein
the area is identified in the one frame image based on color; or
the area is identified in the one frame image by using a deep learning-based model.

4. The method according to claim 1, further comprising: subtracting a global motion vector from the calculated motion vector for each block before performing the clustering,
wherein the global motion vector represents a common movement of the hands to which the first cluster and the second cluster correspond, or a movement of a camera which captures the video.

5. The method according to claim 1, wherein an average value of motion vectors of each of the first cluster and the second cluster represents a movement of the hand corresponding to the cluster.

6. The method according to claim 1, further comprising: determining, in another frame image subsequent to the one frame image, blocks corresponding to the left hand and blocks corresponding to the right hand based on the plurality of first blocks and the plurality of second blocks in the one frame image.

7. The method according to claim 6, further comprising:
identifying an area comprising hands in the another frame image, calculating a motion vector for each block in the identified area, and clustering the calculated motion vectors into a third cluster and a fourth cluster, wherein the third cluster of motion vectors correspond to a plurality of third blocks, and the fourth cluster of motion vectors correspond to a plurality of fourth blocks;
predicting locations of the plurality of first blocks and locations of the plurality of second blocks in the another frame image;
comparing the predicted locations of the plurality of first blocks and the plurality of second blocks with locations of the plurality of third blocks and the plurality of fourth blocks;
determining the blocks corresponding to the left hand and the blocks corresponding to the right hand in the another frame image based on a result of comparison.

8. The method according to claim 7, wherein
one party of the plurality of third blocks and the plurality of fourth blocks which is overlapped with or close to the predicted locations of the plurality of first blocks is determined to be corresponding to the one of the left hand and the right hand;
the other party of the plurality of third blocks and the plurality of fourth blocks which is overlapped with or close to the predicted locations of the plurality of second blocks is determined to be corresponding to the other one of the left hand and the right hand.

9. The method according to claim 1, wherein an action of hands is defined with one or more of movement direction, movement speed and a shape of the left hand and the right hand, in the predetermined action mode.

10. A device for detecting a hand action, comprising one or more processors configured to:
identify an area comprising hands of a person in one frame image of a video;
divide the area into a plurality of blocks, and calculate a motion vector for each of the blocks;
cluster a plurality of resulted motion vectors into a first cluster and a second cluster, wherein a plurality of first blocks corresponding to the first cluster of motion vectors correspond to one of a left hand and a right hand, and a plurality of second blocks corresponding to the second cluster of motion vectors correspond to the other one of the left hand and the right hand;
identify movements of the hands to which the first cluster and the second cluster correspond in a frame image subsequent to the one frame image;
match the identified movements with a predetermined action mode to determine an action of the hands.

11. A recording medium storing a program that, when executed by a computer, causes the computer to perform the method of detecting a hand action according to any one of claims 1-9.
